# EUROPEAN PATENT SPECIFICATION

(11) **EP 2 793 738 B1**
(45) Date of publication and mention of the grant of the patent: **12.07.2017**
(21) Application number: 12821043.2
(22) Date of filing: 12.12.2012
(51) Int. Cl.: A61C 17/02, A61C 17/028, A61C 17/22

(54) **AN ORAL TEETH CLEANING APPLIANCE WITH TIME-SEQUENCED, CUSTOMIZABLE LIQUID BURSTS**
ZAHNREINIGUNGSGERÄT MIT ZEITSEQUENZIERTEN ANPASSBAREN FLÜSSIGKEITSSTÖSSEN
APPAREIL BUCCAL DE NETTOYAGE DENTAIRE AVEC SALVES DE LIQUIDES PERSONNALISABLES ET SÉQUENCÉES DANS LE TEMPS

(30) Priority: 23.12.2011 US 201161579680 P
(43) Date of publication of application: 29.10.2014
(73) Proprietor: Koninklijke Philips N.V., 5656 AE Eindhoven (NL)
(72) Inventor: KLOSTER, Tyler, G., 5656AE Eindhoven (NL)
(74) Representative: Coops, Peter
(86) International application number: PCT/IB2012/057209
(87) International publication number: WO 2013/093717

(56) References cited:
- WO-A1-2006/040018
- WO-A1-2011/077291

## Description

This invention relates generally to oral care appliances for cleaning teeth, and more specifically concerns an appliance which produces a time-sequence of liquid bursts.

Oral care appliances which produce liquid spray bursts or a continuous stream of liquid or liquid/air mixture are in general known. Related documents in the field are exemplified by WO 2006/040018 A1 and WO 2011/077291 A1. The bursts/stream are effective in disrupting biofilm on the teeth, particularly in the interproximal areas of the teeth. The use of a sequence of liquid or liquid/air bursts overcomes the disadvantage of a continuous stream of fluid, which requires a large amount of liquid for each use, with the volume becoming uncomfortable in the mouth of the user. A sequence of bursts from the appliance can be accomplished by manual activation (firing) by the user, but which can, however, become over time monotonous for the user. Firing of the appliance can also be preprogrammed, e.g. at one-second intervals, but such a programmed sequence has been found to have disadvantages for particular users. Some users for instance feel rushed with a programmed sequence, or are unsure when the appliance will fire, resulting in anxiety over the firing sequence of the appliance. Further, a fixed automatic firing in many cases is not suited to produce the best effect for particular individuals. Still further, both manual and fixed automatic firing modes have not been well accepted when a liquid/air burst system is used as part of a power toothbrush with bristles. The liquid/air bursts often become a distraction to the user while they are brushing.

Accordingly, it is desirable to have a liquid/air burst arrangement in an oral cleaning appliance which can be programmed by the user in accordance with their particular requirements/desires.

Accordingly, the oral care appliance comprises: an appliance housing which includes therein a liquid burst system comprising a source of fluid, a nozzle assembly with an exit opening and a liquid burst generating system for delivering a sequence of liquid bursts through the exit opening for cleaning of teeth; and a controller for establishing an automatic sequence and timing of delivery of said liquid bursts through the exit opening, determined by the user, wherein the controller for establishing the automatic sequence of liquid bursts is adapted to initiate a learning mode, to establish the desired sequence and timing of the liquid bursts by the user, and to store the desired sequence for carrying out the stored sequence in operation of the appliance in response to a user operating a selected member or members on the appliance.
Figures 1 and 1A are perspective views of a liquid/air burst appliance with a spray nozzle, particularly useful in cleaning interproximal areas of the teeth.
Figures 2 and 2A are cross-sectional and exploded views of a power toothbrush with a liquid/air burst system.
Figure 3 is a block diagram showing the elements and sequence of steps in the user-controlled programming of an appliance of Figures 1 or 2 or other similar appliances.

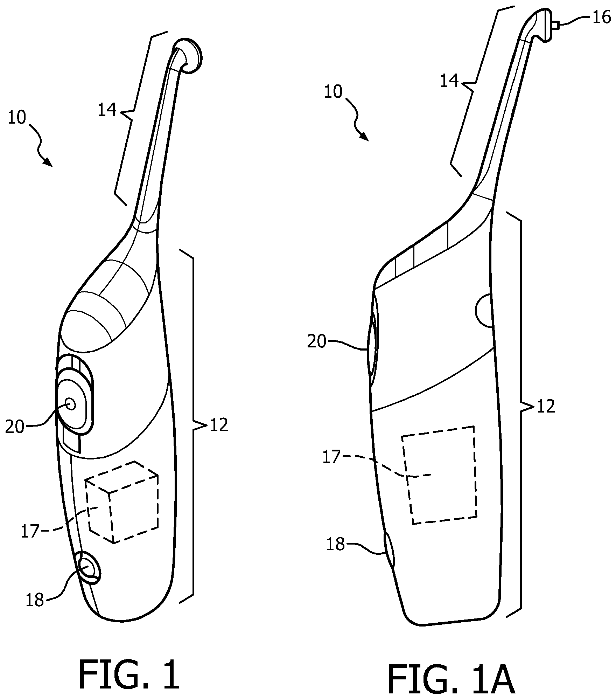

Figures 1 and 1A show a teeth cleaning appliance 10 using a sequence of bursts of liquid or a liquid/air mixture (hereinafter referred to simply as liquid) to clean teeth, in particular, the interproximal areas of the teeth. Generally, appliance 10 includes a handle portion 12 and an extended nozzle portion 14, with a spray tip 16 at the distal end thereof, through which bursts of liquid exit. The handle includes conventional elements for producing the liquid bursts, including a liquid reservoir, a system for producing the sequence of liquid bursts, a power system and a microprocessor controller, shown generally at 17. The appliance includes an on/off switch 18 and an actuation button 20, which produces a manual firing of the appliance, upon each operation of which a single burst of liquid exits out spray tip 16.

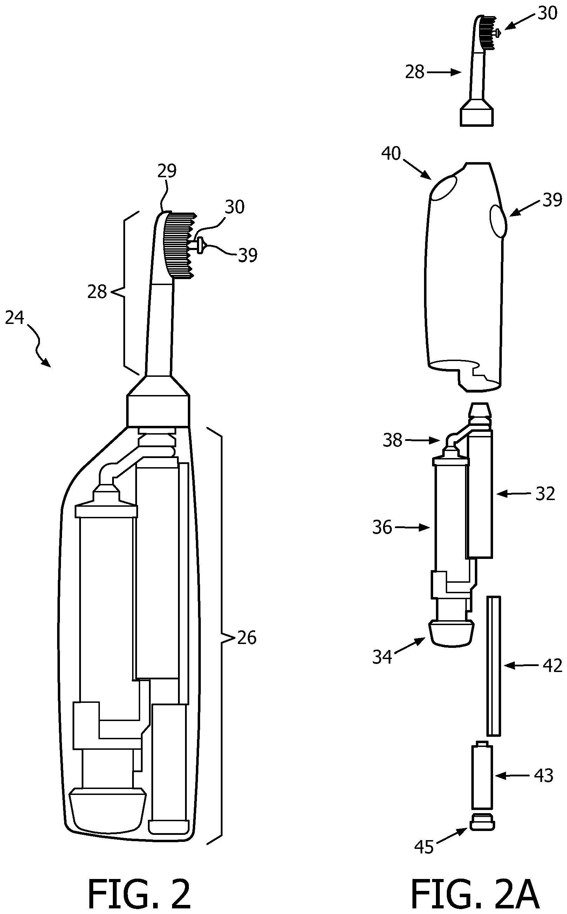

Figures 2 and 2A show an oral care appliance in the form of a power toothbrush 24, with a liquid burst system incorporated therein. The appliance includes a handle/housing portion 26 and a brushhead assembly portion 28 which includes a bristle plate 29 with bristles 30 at a distal end thereof. The handle includes a drive train system 32 for moving the brushhead in a desired oscillatory (back and forth) motion, which produces a mechanical cleansing/scrubbing of the teeth. The handle also includes a water reservoir 34 and a pump/delivery system 36 for generation of the liquid bursts. Bursts of liquid are moved to the bristle plate through a fluid path 38, which connects with the brushhead assembly 28. Positioned within the set of bristles 30 is a spray nozzle 39 (shown exploded for clarity) at the end of the fluid path. The power toothbrush is actuated by a power button 39, while the spray system to produce bursts of fluid spray is actuated by a manual actuation button 40. The operation of the appliance of Figures 2 and 2A is controlled by a microprocessor controller, shown generally at 42. A battery for power is shown at 43 and a charging coil at 45.

As discussed above, there are disadvantages with the use of a liquid burst appliance in an embodiment similar to that of Figures 1 and 1A or as part of a power toothbrush, shown in Figures 2 and 2A. There are disadvantages either when the liquid burst is initiated manually by the user, or produced in an automatic mode in a specified time sequence. In the present invention, the sequence and timing of the liquid bursts can be programmed by individual users. This is typically implemented in software in the microcontroller and selected mechanical elements of the appliance and can be accomplished in various ways/steps.

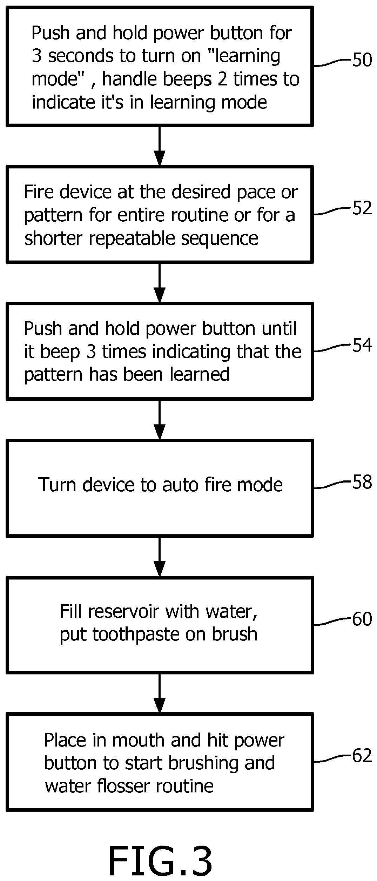

In one embodiment, for example, referring now to Figure 3, the power button on the appliance is operated by the user and held for a selected period of time, established in the controller, as shown in block 50. Figure 3 uses 3 seconds as a reasonable example. The programming sequence in the controller is initiated in a learning mode to establish the user's desired programmed sequence. The appliance then provides some indication, either audible or visual, to indicate that the program is in the learning mode. One example would be two audible beeps, as shown in block 50.

Next, in block 52 the manual fire button on the appliance (20 in Figure 1) is operated by the user at the desired pace or sequence for either an entire teeth cleaning routine (for the entire mouth) or for a shorter, repeatable sequence. One example is a series of successive firings with a particular interval, e.g. two seconds, to cover a selected number of teeth, such as the interproximal spaces for a quadrant of the mouth, or a small section of teeth, such as the molars, or the front teeth. There could then be a longer time interval used to position the appliance at the start of the next section of teeth to be cleaned, *e.g.* the next quadrant. This is by way of example only; the actual sequence can be determined completely by the user. The time intervals, established by manual firing by the user, establishes a firing sequence in the memory of the controller.

When the desired sequence is completed by the user, the power button is operated for a selected period of time, confirming the sequence in memory, determined by the microcontroller, as shown in block 54. This time could be for instance, until the handle beeps 3 times, as shown for example in block 54, although this can be varied. A visual or tactile indication could also be provided; the same could be provided in block 50 to indicate the learning mode. At this point, the user's desired programmed sequence has been learned by the microcontroller.

In the next step, shown at block 58, the appliance is changed to an auto-fire mode by operation of a separate button or selected operation of the on-off power button. The appliance is now ready for use with its custom programmed sequence. The reservoir of the appliance is filled with water, toothpaste is placed on the brush, if the appliance has bristles, ready to be used, as shown in block 60. When the power button is operated, the programmed firing sequence will begin, shown at block 62.

If the user desires at any time to modify the original custom sequence, the steps outlined above are repeated.

Accordingly, an oral care appliance with a liquid spray burst capability having a custom-sequence program capability has been described. The custom programming capability typically uses existing elements on the device, such as the on/off power button, along with a program in the microcontroller. The appliance can be programmed to provide a custom sequence of successive bursts to assist in the cleansing of teeth, particularly the interproximal areas.

## Claims

1. An oral care appliance (10), comprising:
an appliance housing (26) which includes therein a liquid burst system comprising a source of fluid, a nozzle assembly with an exit opening (39) and a liquid burst generating system for delivering a sequence of liquid bursts through the exit opening for cleaning of teeth; and
a controller (42) for establishing an automatic sequence and timing of delivery of said liquid bursts through the exit opening, determined by action of the user on the appliance,
wherein the controller (42) for establishing the automatic sequence of liquid bursts is adapted to initiate a learning mode, to establish the desired sequence and timing of the liquid bursts by the user, and to store the desired sequence for carrying out the stored sequence in operation of the appliance in response to a user operating a selected member or members on the appliance.

2. The oral care appliance of claim 1, including a visual or aural indicator communicating to the user that the appliance is in a learning mode for establishing a sequence determined by the user and thereafter that the appliance has stored the desired sequence established by the user.

3. The oral care appliance of claim 1, wherein the appliance includes a power button and wherein the learning mode is initiated by operating the power button for a selected period of time.

4. The oral care appliance of claim 3, wherein the power button is operated following establishment of the desired sequence of operation for a selected period of time to store the desired sequence for future operation.

5. The oral care appliance of claim 1, wherein the stored sequence includes a selected first time interval between a plurality of successive liquid bursts covering a selected region of the teeth, in combination with a second time interval, longer than the first time interval, occurring after each successive plurality of first time intervals, sufficient to cover the entire mouth.

6. The oral care appliance of claim 1, wherein the appliance includes a set of bristles (30) in combination with the liquid burst system and a drive system (32) within the housing for operating the bristles in a selected manner to mechanically clean the teeth.

7. A method for programming the operation of an oral care appliance of one of claims 1 to 6 comprising the steps of:
initiating a learning mode step for a timed sequence of liquid bursts;
operating the appliance in a desired timed sequence of operation, including selected intervals between successive liquid bursts; and
confirming the operated desired timed sequence so that in future operation, the appliance operates in the desired time sequence.

8. The method of claim 7, wherein the appliance has a power on/off button, and wherein the initiation of the learning mode and the confirming of the desired timed sequence is produced by operating the power button in a selected manner.

9. The method of claim 8, wherein the selected manner is time.

10. The method of claim 7, wherein the appliance provides a visual or aural indication that the learning mode has been initiated and that the desired sequence has been stored for future operation of the appliance.

11. The method of claim 7, wherein the learned time sequence is stored in the memory of a controller portion of the appliance.

## Patentansprüche

1. Mundpflegegerät (10), umfassend:
ein Gerätegehäuse (26), das darin ein Flüssigkeits-Burst-System mit einer Füssigkeitsquelle, eine Düsenanordnung mit einer Austrittsöffnung (39) und ein Flüssigkeits-Burst-Erzeugungssystem zum Liefern einer Sequenz von Flüssigkeitsaustretungen durch die Austrittsöffnung zum Reinigen der Zähne aufweist; und
eine Steuereinrichtung (42) zum Erzeugen einer automatischen Sequenz und eines zeitlichen Ablaufs der Abgabe der flüssigen Bursts durch die Austrittsöffnung, bestimmt durch die Wirkung des Benutzers auf das Gerät,
wobei die Steuerung (42) zum Erzeugen der automatischen Folge von Flüssigkeitsaustretungen dazu ausgelegt ist, einen Lernmodus einzuleiten, um die gewünschte Sequenz und das Timing der Flüssigkeitsaustretungen durch den Benutzer festzulegen und die gewünschte Sequenz zum Ausführen der gespeicherten Sequenz im Betrieb des Geräts zu speichern als Reaktion auf einen Benutzer, der ein ausgewähltes Mitglied oder Mitglieder des Gerätes ist.

2. Mundpflegegerät nach Anspruch 1, mit einer visuellen oder klanglichen Anzeige, die dem Benutzer mitteilt, dass sich das Gerät in einem Lernmodus befindet, um eine vom Benutzer bestimmte Sequenz festzulegen und danach mitteilt, dass das Gerät die gewünschte Sequenz gespeichert hat, die vom Benutzer festgelegt wird.

3. Mundpflegegerät nach Anspruch 1, wobei das Gerät eine Power-Taste enthält und wobei der Lernmodus durch Betätigen der Power-Taste für eine ausgewählte Zeitspanne initiiert wird.

4. Mundpflegegerät nach Anspruch 3, wobei die Power-Taste nach dem Herstellen der gewünschten bestimmten Sequenz für eine ausgewählte Zeitspanne betrieben wird, um die gewünschte Sequenz für einen zukünftigen Betrieb zu speichern.

5. Mundpflegegerät nach Anspruch 1, wobei die gespeicherte Sequenz ein ausgewähltes erstes Zeitintervall zwischen einer Vielzahl von aufeinanderfolgenden flüssigen Bursts umfasst, die einen ausgewählten Bereich der Zähne abdecken, in Kombination mit einem zweiten Zeitintervall, das länger als das erste Zeitintervall ist, das nach jeder aufeinanderfolgende Vielzahl von ersten Zeitintervallen auftritt, die ausreichen, um den gesamten Mund zu bedecken.

6. Mundpflegegerät nach Anspruch 1, **dadurch gekennzeichnet, dass** das Gerät einen Satz von Borsten (30) in Kombination mit dem Flüssigkeits-Burst-System und ein Antriebssystem (32) innerhalb des Gehäuses umfasst, um die Borsten in einer ausgewählten Weise zu betätigen, um die Zähne mechanisch zu reinigen.

7. Verfahren zum Programmieren des Betriebs eines Mundpflegegerätes nach einem der Ansprüche 1 bis 6, das die folgenden Schritte umfasst:
Einleiten eines Lernmodus-Schrittes für eine zeitliche Abfolge von Flüssigkeitsaustretungen;
Betreiben des Geräts in einer gewünschten Sequenz des Betriebs, einschließlich ausgewählter Intervalle zwischen aufeinanderfolgenden flüssigen Bursts; und
Bestätigung der betriebenen gewünschten Sequenz, so dass das Gerät im zukünftigen Betrieb in der gewünschten Sequenz arbeitet.

8. Verfahren nach Anspruch 7, **dadurch gekennzeichnet, dass** das Gerät einen Ein- / Ausschalter aufweist und wobei die Initialisierung des Lernmodus und die Bestätigung der gewünschten zeitgesteuerten Sequenz durch Betätigen der Power-Taste in einer ausgewählten Weise erfolgt.

9. Verfahren nach Anspruch 8 wobei die ausgewählte Weise Zeit ist.

10. Verfahren nach Anspruch 7, wobei das Gerät eine visuelle oder klangliche Anzeige hat, die dem Benutzer mitteilt, dass der Lernmodus eingeleitet wurde und dass die gewünschte Sequenz für den zukünftigen Betrieb des Gerätes gespeichert wurde.

11. Verfahren nach Anspruch 7, wobei die gelernte Sequenz in dem Speicher eines Steuerungsabschnitts des Geräts gespeichert ist.

## Revendications

1. Appareil de soin buccal (10), comprenant :
un boîtier d'appareil (26) qui comprend à l'intérieur un système de salves de liquides, comprenant une source de fluide, un ensemble de buses avec une ouverture de sortie (39) et un système de génération de salves de liquide pour fournir une séquence de salves de liquide à travers l'ouverture de sortie afin de nettoyer les dents ; et
un système de commande (42) pour établir une séquence automatique et une temporisation de la fourniture desdites salves de liquide à travers l'ouverture de sortie, déterminées par l'action de l'utilisateur sur l'appareil,
dans lequel le système de commande (42) pour établir la séquence automatique de salves de liquide est adapté pour lancer un mode d'apprentissage, afin d'établir la séquence souhaitée et la temporisation des salves de liquide par l'utilisateur, et pour stocker la séquence souhaitée, afin de réaliser la séquence stockée lors de l'actionnement de l'appareil en réponse à l'actionnement par l'utilisateur d'un élément ou d'éléments sélectionnés sur l'appareil.

2. Appareil de soin buccal selon la revendication 1, comprenant un indicateur visuel ou sonore communiquant à l'utilisateur que l'appareil est en mode d'apprentissage, afin d'établir une séquence déterminée par l'utilisateur et ensuite que l'appareil a stocké la séquence souhaitée établie par l'utilisateur.

3. Appareil de soin buccal selon la revendication 1, dans lequel l'appareil comprend un bouton d'alimentation et dans lequel le mode d'apprentissage est lancé en actionnant le bouton d'alimentation pendant un laps de temps sélectionné.

4. Appareil de soin buccal selon la revendication 3, dans lequel le bouton d'alimentation est actionné après l'établissement de la séquence d'opérations souhaitée, pendant un laps de temps sélectionné, afin de stocker la séquence souhaitée pour un actionnement ultérieur.

5. Appareil de soin buccal selon la revendication 1, dans lequel la séquence stockée comprend un premier intervalle de temps sélectionné entre une pluralité de salves de liquide successives couvrant une région sélectionnée des dents, en combinaison avec un second intervalle de temps, plus long que le premier intervalle de temps, survenant après chaque pluralité successive de premiers intervalles de temps, suffisant pour couvrir l'ensemble de la bouche.

6. Appareil de soin buccal selon la revendication 1, dans lequel l'appareil comprend un ensemble de poils (30) en combinaison avec le système de salves de liquides et un système de commande (32) dans le boîtier pour actionner les poils d'une manière sélectionnée, afin de nettoyer mécaniquement les dents.

7. Procédé de programmation du fonctionnement d'un appareil de soin buccal selon l'une quelconque des revendications 1 à 6, comprenant les étapes consistant à :
lancer une étape de mode d'apprentissage pour une séquence temporisée de salves de liquide ;
actionner l'appareil selon une séquence d'opérations temporisée souhaitée, comprenant des intervalles sélectionnés entre des salves de liquide successives ; et
confirmer la séquence temporisée souhaitée actionnée, de sorte que lors d'un actionnement ultérieur, l'appareil fonctionne selon la séquence temporisée souhaitée.

8. Procédé selon la revendication 7, dans lequel l'appareil a un bouton d'alimentation marche/arrêt, et dans lequel le début du mode d'apprentissage et la confirmation de la séquence temporisée souhaitée s'effectuent en actionnant le bouton d'alimentation selon une modalité sélectionnée.

9. Procédé selon la revendication 8, dans lequel la modalité sélectionnée est le temps.

10. Procédé selon la revendication 7, dans lequel l'appareil fournit une indication visuelle ou sonore que le mode d'apprentissage a été lancé et que la séquence souhaitée a été stockée pour l'actionnement ultérieur de l'appareil.

11. Procédé selon la revendication 7, dans lequel la séquence de temps apprise est stockée dans la mémoire d'une partie du dispositif de commande de l'appareil.
